# NEUE EUROPÄISCHE PATENTSCHRIFT

(11) **EP 1 181 337 B2**
(45) Veröffentlichungstag und Bekanntmachung des Hinweises auf die Entscheidung über den Einspruch: **05.12.2007**
(45) Hinweis auf die Patenterteilung: 16.02.2005
(21) Anmeldenummer: 00918883.0
(22) Anmeldetag: 14.04.2000
(51) Int. Cl.: C09D 4/00, C09D 4/06, C09D 175/14, C08J 7/04

(54) **THERMISCH UND MIT AKTINISCHER STRAHLUNG HÄRTBARER BESCHICHTUNGSSTOFF UND SEINE VERWENDUNG**
COATING MATERIAL WHICH CAN BE THERMALLY CURED AND HARDENED BY ACTINIC RADIATION AND USE THEREOF
MATERIAU DE REVETEMENT DURCISSABLE A CHAUD ET PAR RAYONNEMENT ACTINIQUE ET SON UTILISATION

(30) Priorität: 06.05.1999 DE 19920799
(43) Veröffentlichungstag der Anmeldung: 27.02.2002
(73) Patentinhaber: BASF Coatings AG, 48165 Münster (DE)
(72) Erfinder: ALLARD, Euring, Maxime, F-67120 Dachstein (FR); JAECQUES, Cyrille, F-67590 Safriveighouse (FR); KAUFFER, Isabelle, F-67530 Beerset (FR)
(74) Vertreter: Leifert & Steffan
(86) Internationale Anmeldenummer: PCT/EP2000/003401
(87) Internationale Veröffentlichungsnummer: WO 2000/068323

(56) Entgegenhaltungen:
- EP-A- 0 262 464
- EP-A- 0 540 884
- EP-A- 0 753 358
- EP-A- 0 925 170
- EP-A- 0 928 800
- EP-A- 0 952 170
- WO-A-99/55785
- DE-C- 19 709 560
- US-A- 4 393 187
- US-A- 4 607 084
- PATENT ABSTRACTS OF JAPAN vol. 1995, no. 01, 28. Februar 1995 (1995-02-28) & JP 06 286008 A (ISUZU MOTORS LTD;OTHERS: 01), 11. Oktober 1994 (1994-10-11)

## Beschreibung

Die vorliegende Erfindung betrifft die Verwendung eines neuen thermisch und mit aktinischer Strahlung härtbaren Beschichtungsstoffs zum Versiegeln der porösen Oberfläche von SMC (Sheet Moulded Compounds) und BMC (Bulk Moulded Compounds).

SMC (Sheet Moulded Compounds) und BMC (Bulk Moulded Compounds) werden seit langer Zeit für die Herstellung komplex geformter sanitärer Artikel, Haushaltsgeräte und Bauteile, insbesondere für den Automobilbau, wie Schutzbleche, Kotflügel, Türen oder Reflektoren von Lampen, verwendet. Aufgrund ihrer Struktur und ihrer stofflichen Zusammensetzung auf der Basis von Glasfasern sind die SMC (Sheet Moulded Compounds) und BMC (Bulk Moulded Compounds) von hoher Temperaturbeständigkeit und ertragen Temperaturen von 190 bis 200 °C. Dabei weisen sie nur eine geringe Deformation auf. Außerdem lassen sich die komplexen Artikel mit dieser Technologie leichter und mit größerer Genauigkeit herstellen als mit verstärkten thermoplastischen Kunststoffen.

Ein Nachteil der SMC (Sheet Moulded Compounds) und BMC (Bulk Moulded Compounds) ist, daß sie an ihrer Oberfläche mikroporös sind und deshalb nicht direkt beschichtet werden können, weil es in der Beschichtung bei 70 bis 80 °C zur Bildung von Mikrobläschen (microbubbling, blistering) durch ausgasende Monomere wie Styrol kommt.

Um diesem Problem zu begegnen müssen aufwendige Maßnahmen ergriffen werden.

So ist beispielsweise aus der europäischen Patentschrift EP-A-0 753 358 ein Verfahren zur Beschichtung von SMC (Sheet Moulded Compounds) und BMC (Bulk Moulded Compounds) bekannt, bei dem auf das Material zunächst eine Schicht aus einem Haftvermittler und anschließend eine gasundurchlässige Barriereschicht aufgetragen werden. Die Barriereschicht besteht aus einem transparenten Zweikomponenten-Polyrethanlack, welche bei 60 °Celsius vollständig ausgehärtet ist. Indes kann die Barriereschicht nicht alle Anforderungen erfüllen, welche an eine Versiegelung gestellt werden.

Nach einem anderen Verfahren wird ein Pulverlack zur Versiegelung aufgetragen. Indes weisen SMC (Sheet Moulded Compounds) und BMC (Bulk Moulded Compounds) eine niedrige Wärmeleitfähigkeit auf, so daß das Pulver nicht richtig verfließt. Außerdem steigern die Temperaturen von bis zu 180 °C, die zur Vernetzung des Pulverlacks notwendig sind, in hohem Maße das Ausgasen der Monomeren aus den Materialien. Um dies wiederum zu unterdrücken, müssen Schichtdicken von bis zu 70 µm angewandt werden. Dies ist zum einen aufgrund des höheren Materialverbrauchs unwirtschaftlich, zum anderen müssen die vernetzten Pulverlackschichten geschliffen werden, um Oberflächenstrukturen wie Orangenhaut zu beseitigen.

Die SMC (Sheet Moulded Compounds) und BMC (Bulk Moulded Compounds) können auch mit Beschichtungsstoffen, die mit aktinischer Strahlung, insbesondere UV-Strahlung, härtbar sind, versiegelt werden (vgl. die Patentschriften US-A-4,139,385 oder EP-A-0 262 464). Die resultierende Versiegelung erweist sich aber oftmals als zu hart und als schlecht überlackierbar.

Weiterer relevante Stand der Technik kann auch den Dokumenten WO 99/55 785, WO 98/40 171, US-A-4 607 084 und DE-C- 19 709 560 entnommen werden.

Der vorliegenden Erfindung lag daher die Aufgabe zugrunde, eine neue Versiegelung für SMC (Sheet Moulded Compounds) und BMC (Bulk Moulded Compounds) zu finden, welche die Nachteile des Standes der Technik nicht mehr länger aufweist, sondern die Bildung von Mikrobläschen (microbubbling, blistering) ohne großen Aufwand wirksam unterdrückt, eine glatte, von Oberflächenstrukturen wie Orangenhaut freie Oberfläche aufweist, welche keine Nachbehandlung erfordert, und leicht und sicher überlackiert werden kann, ohne daß sich danach Probleme der Zwischenschichthafiung ergeben.

Demgemäß wurde die neue Verwendung eines thermisch und mit aktinischer Strahlung härtbare Beschichtungsstoffs gefunden, enthaltend
(a1) 5-90 Gew.%, bezogen auf den Beschichtungsstoff, mindestens eines Bestandteiles mit
   (a11) mindestens zwei (Meth)Acrylatgruppen, welche der Vernetzung mit aktinischer Strahlung dienen, oder
   (a11) mit mindestens zwei (Meth)Acrylatgruppen und
   (a12) mit mindestens einer funktionellen Gruppe, welche mit der komplementären funktionellen Gruppe (a22) des Bestandteils (a2) thermische Vernetzungsreaktionen eingehen kann,
(a2) mindestens einen von (a1) verschiedenen Bestandteil mit
   (a21) mindestens zwei funktionellen Gruppen, weiche der Vernetzung mit aktinischer Strahlung dienen, und
   (a22) mindestens einer funktionellen Gruppe, welche der thermischen Vernetzung dient,
   und
(a7) mindestens einen thermisch härtbaren Bestandteil, ausgewählt aus thermisch härtbaren Bindemitteln und Vernetzungsmitteln; sowie gegebenenfalls
(a3) mindestens einen Photoinitiator;
(a4) mindestens einen Initiator der thermischen Vernetzung;
(a5) mindestens einen mit aktinischer Strahlung und/oder thermisch härtbaren Reaktivverdünner, und
(a6) mindestens ein Lackadditiv;
   für die Versiegelung von SMC (Sheet Molded Compounds) und BMC (Bulk Molded Compounds).

Im folgenden wird der neue thermisch und mit aktinischer Strahlung härtbare Beschichtungsstoff als "erfindungsgemäß zu verwendender Beschichtungsstoff" bezeichnet.

Außerdem wurde das neue Verfahren zur Versiegelung von SMC (Sheet Moulded Compounds) und BMC (Bulk Moulded Compounds) durch Applikation einer Primerschicht aus einem Beschichtungsstoff und Aushärten der Primerschicht gefunden, bei dem man als Beschichtungsstoff den erfindungsgemäß zu verwendenden Beschichtungsstoff verwendet.

Im folgenden wird das neue Verfahren zur Versiegelung von SMC (Sheet Moulded Compounds) und BMC (Bulk Moulded Compounds) als "erfindungsgemäßes Versiegelungsverfahren" bezeichnet.

Des weiteren wurden die neuen mit einer Primerschicht versiegelten SMC (Sheet Moulded Compounds) und BMC (Bulk Moulded Compounds) gefunden, die mit Hilfe des erfindungsgemäßen Versiegelungsverfahrens herstellbar sind.

Im folgenden werden die neuen mit einer Primerschicht versiegelten SMC (Sheet Moulded Compounds) und BMC (Bulk Moulded Compounds) als "erfindungsgemäße Compounds" bezeichnet.

Darüber hinaus wurden Klarlackierungen und farb- und/oder effektgebenden Mehrschichtlackierungen gefunden, welche mit Hilfe des erfindungsgemäß zu verwendenden Beschichtungsstoffs hergestellt werden können.

Im Rahmen der vorliegenden Erfindung bedeutet der Begriff "thermische Härtung" die durch Hitze initiierte Härtung einer Lackschicht aus einem Beschichtungsstoff, bei der üblicherweise ein separat vorliegendes Vernetzungsmittel angewandt wird. Üblicherweise wird dies von der Fachwelt als Fremdvernetzung bezeichnet. Sind die Vernetzungsmittel in die Bindemittel bereits eingebaut, spricht man auch von Selbstvernetzung. Erfindungsgemäß ist die Frerndvernetzung von Vorteil und wird deshalb bevorzugt angewandt.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch radikalische oder kationische Photoinitiatoren initiiert und ist ihrem Mechanismus nach eine radikalische oder kationische Photopolymerisation.

Werden die thermische und die Härtung mit aktinischem Licht bei einem Beschichtungsstoff gemeinsam angewandt, spricht man auch von "Dual Cure".

Im Hinblick auf den Stand der Technik war es überraschend und für den Fachmann nicht vorhersehbar, daß die sehr komplexe Aufgabe, welche der Erfindung zugrunde liegt mit Hilfe des erfindungsgemäß zu verwendenden Beschichtungsstoffs, des erfindungsgemäßen Versiegelungsverfahrens und der erfindungsgemäßen Compounds gelöst werden konnte, wobei mit den Klarlackierungen und Mehrschichtlackierungen dem erfindungsgemäß zu verwendenden Beschichtungsstoff noch weitere. Anwendungsgebiete erschlossen werden konnten.

Besonders überraschend ist, daß aufgrund der Verwendung des erfindungsgemäß zu verwendenden Beschichtungsstoffs eine Versiegelung resultiert, welche die Bildung von Mikrobläschen (microbubbling, blistering) ohne großen Aufwand wirksam unterdrückt, eine glatte, von Oberflächenstrukturen wie Orangenhaut freie Oberfläche aufweist, welche keine Nachbehandlung erfordert, und leicht und sicher überlackiert werden kann, ohne daß sich danach Probleme der Zwischenschichthaftung ergeben.

Des weiteren ist es überraschend, daß die hervorragende Überlackierbarkeit auch dann noch erhalten bleibt, wenn die Versiegelung oder Primerschicht auf elektrisch leitfähigen erfindungsgemäßen Compounds mit einem Elektrotauchlack überlackiert wird. Dies ermöglicht es, die erfindungsgemäßen Compounds direkt in die unbeschichteten Automobilkarosserien einzubauen und in gleicher Weise wie die Metallteile zu beschichten, was einen ganz besonderen Vorteil der vorliegenden Erfindung darstellt.

Noch mehr überrascht, daß der erfindungsgemäß zu verwendende Beschichtungsstoff sich generell hervorragend für die Lackierung auch anderer grundierter oder ungrundierter Substrate als SMC (Sheet Moulded Compounds) und BMC (Bulk Moulded Compounds) eignet.

Als Substrate kommen hierbei alle zu lackierenden Oberflächen, die einer kombinierten Härtung unter Anwendung von Hitze und aktinischer Strahlung zugänglich sind in Betracht, das sind z. B. Metalle, Kunststoffe, Holz, Keramik, Stein, Textil, Leder, Glas, Glasfasern, Glas- und Steinwolle, mineral- und harzgebundene Baustoffe, wie Gips- und Zementplatten oder Dachziegel. Demnach ist der erfindungsgemäß zu verwendende Beschichtungsstoff auch für Anwendungen außerhalb der Automobillackierung geeignet, insbesondere für die Lackierung von Möbeln und die industrielle Lackierung, inklusive Coil Coating und Container Coating. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen. Insbesondere ist der erfindungsgemäß zu verwendende Beschichtungsstoff als Überzug von Basislacken, insbesondere Wasserbasislacken, geeignet, vorzugsweise in der Automobilindustrie.

Mit dem erfindungsgemäß zu verwendenden Beschichtungsstoff können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es kann auch für die Beschichtung von üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Der erfindungsgemäß zu verwendende Beschichtungsstoff enthält mindestens einen Bestandteil (a1) mit mindestens zwei (Meth)Acrylatgruppen (a11), welche der Vernetzung mit aktinischer Strahlung dienen, oder mindestens einen Bestandteil mit mindestens zwei (Meth)acrylatgruppen (a11) und mit mindestens einer funktionellen Gruppe (a12), welche mit der komplementären funktionellen Gruppe (a22) des Bestandteils (a2) thermische Vernetzungsreaktionen eingehen kann.

Beispiele geeigneter funktioneller Gruppen (a11) sind Epoxidgruppen oder olefinisch ungesättigte Doppelbindungen, wie sie in Vinyl-, Allyl-, Cinnamoyl-, Methacryl- oder Acrylgruppen, insbesondere Methacryl- oder Acrylgruppen, vorliegen. Bekanntermaßen werden die Epoxidgruppen für die kationische Photopolymerisation verwendet, wogegen die olefinisch ungesättigten Doppelbindungen in der Hauptsache für die radikalische Photopolymerisation in Betracht kommen. Der Bestandteil (a1) kann Epoxidgruppen und olefinische Doppelbindungen enthalten, so daß er nach beiden Mechanismen der Vernetzung mit aktinischer Strahlung unterworfen werden kann. Es ist indes von Vorteil, ausschließlich olefinisch ungesättigte Doppelbindungen der genannten Art als funktionelle Gruppen (a11) zu verwenden.

Des weiteren kann der Bestandteil (a1) mindestens eine, vorzugsweise mindestens zwei funktionelle Gruppen (a12), welche mit den komplementären funktionellen Gruppen (a22) des nachstehend beschriebenen Bestandteils (a2) thermische Vernetzungsreaktionen eingehen können, enthalten.

Beispiele geeigneter komplementärer funktioneller Gruppen (a12) und (a22) ergeben sich aus der nachfolgenden Übersicht, worin R für organische Reste steht.

### Übersicht: Beispiele komplementärer funktioneller

### Gruppen (a12) und (a22) im

### Bestandteil (a1) und Bestandteil (a2)

### oder

### Bestandteil (a2) und Bestandteil (a1)

| | |
|---|---|
| -SH | -C(O)-OH |
| -NH₂ | -C(O)-O-C(O)- |
| -OH | -NCO |
| | -NH-C(O)-OR |
| | -CH₂-OH |
| | -CH₂-O-CH₃ |
| | -NH-C(O)-CH(-C(O)OR)₂ |
| | -NH-C(O)-CH(-C(O)OR)(-C(O)-R) |
| | -NH-C(O)-NR₂ |
| | = Si(OR)₂ |
| | O |
| | -CH-CH₂ |
| -C(O)-OH | O |
| | -CH-CH₂ |
| -O-C(O)-CR=CH₂ | -OH |
| -O-CR=CH₂ | -NH₂ |
| | -C(O)-CH₂-C(O)-R |
| | -CH=CH₂ |

Die Auswahl der jeweiligen komplementären Gruppen (a12) und (a22) richtet sich zum einen danach, daß sie keine unerwünschten durch aktinische Strahlung initiierten Reaktionen eingehen oder die Härtung mit aktinischer Strahlung nicht stören oder inhibieren, und zum anderen danach, in welchem Temperaturbereich die thermische Härtung erfolgen soll. Hierbei ist es, insbesondere im Hinblick auf thermisch sensible Substrate wie Kunststoffe, erfindungsgemäß von Vorteil, einen Temperaturbereich zu wählen, welcher 100 °C, insbesondere 80 °C nicht überschreitet. Im Hinblick auf diese Rahmenbedingungen haben sich Hydroxylgruppen und Isocyanatgruppen als komplementäre funktionelle Gruppen als vorteilhaft erwiesen, weswegen sie erfindungsgemäß bevorzugt angewandt werden. Besondere Vorteile resultieren, wenn die Hydroxylgruppen als funktionelle Gruppen (a12) und die Isocyanatgruppen als funktionelle Gruppen (a22) verwendet werden.

Sofern in dem Bestandteil (a1) keine funktionelle Gruppe (a12) vorhanden ist, ist in dem Beschichtungsstoff I mindestens ein thermisch härtbarer Bestandteil (a7), der nachstehend im Detail beschrieben wird, enthalten. Erfindungsgemäß ist es jedoch von Vorteil, wenn der Bestandteil (a1) mindestens eine funktionelle Gruppe (a12) enthält.

Demnach handelt es sich bei dem besonders vorteilhaften Bestandteil (a1) um eine mit aktinischer Strahlung härtbare oligomere oder polymere Verbindung, welche mindestens eine, vorzugsweise mindestens zwei und insbesondere mindestens drei Hydroxylgruppe(n) (a12) und mindestens zwei und insbesondere drei (Meth)Acrylgruppen (a11) enthält.

Im Rahmen der vorliegenden Erfindung wird unter einer oligomeren Verbindung eine Verbindung verstanden, welche im allgemeinen im Mittel 2 bis 15 sich wiederholende Grundstrukturen oder Monomereinheiten aufweist. Unter einer polymeren Verbindung wird dagegen eine Verbindung verstanden, welche im allgemeinen im Mittel mindestens 10 sich wiederholende Grundstrukturen oder Monomereinheiten aufweist. Verbindungen dieser Art werden von der Fachwelt auch als Bindemittel oder Harze bezeichnet.

Im Unterschied dazu ist im Rahmen der vorliegenden Erfindung unter einer niedermolekularen Verbindung, eine Verbindung zu verstehen, welche sich im wesentlichen nur von einer Grundstruktur oder einer Monomereinheit ableitet. Verbindungen dieser Art werden von der Fachwelt im allgemeinen auch als Reaktivverdünner bezeichnet.

Die als Bindemittel (a1) eingesetzten Polymere bzw. Oligomere weisen üblicherweise ein zahlenmittleres Molekulargewicht von 500 bis 50.000, bevorzugt von 1.000 bis 5.000, auf. Bevorzugt weisen sie ein Doppelbindungsäquivalentgewicht von 400 bis 2.000, besonders bevorzugt von 500 bis 900, auf. Außerdem weisen sie bei 23 °C bevorzugt eine Viskosität von 250 bis 11.000 mPas auf. Besonders bevorzugt werden sie in einer Menge von 10 bis 80 Gew.-% und insbesondere 15 bis 70 Gew.-%, jeweils bezogen auf die Gesamtmenge des Beschichtungsstoffs angewandt.

Beispiele geeigneter Bindemittel oder Harze (a1) entstammen den Oligomer- und/oder Polymerklassen der (meth)acrylfunktionellen (Meth)Acrylcopolymeren, Polyetheracrylaten, Polyesteracrylaten, Polyestern, Epoxyacrylaten, Urethanacrylaten, Aminoacrylaten, Melaminacrylaten, Silikonacrylaten und Pbosphazenacrylaten und den entsprechenden Methacrylaten. Bevorzugt werden Bindemittel (a1) eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Urethan(meth)acrylate (a1) werden erhalten durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmittel, Di- bzw. Polyisocyanat und Hydroxyalkylester werden dabei bevorzugt so gewählt, daß
1.) das Äquivalentverhältnis der NCO-Gruppen zu den reaktiven Gruppen des Kettenverlängerungsmittels (Hydroxyl-, Amino- bzw. Mercaptylgruppen) zwischen 3 : 1 und 1 : 2, bevorzugt bei 2 : 1, liegt und
2.) die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate herzustellen, indem zunächst ein Teil der Isocyanatgruppen eines Di- oder Polyisocyanates mit mindestens einem Hydroxyalkylester umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 3 : 1 und 1 : 2, bevorzugt bei 2 : 1 liegt und das Äquivalentverhältnis der restlichen NCO-Gruppen zu den OH-Gruppen des Hydroxyalkylesters 1 : 1 beträgt.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem Hydroxyalkylester und im Anschluß hieran können die restlichen Isocyanatgruppen mit einem Diamin umgesetzt werden.

Diese verschiedenen Herstellverfahren der Urethan(meth)acrylate (a1) sind beispielsweise aus der Patentschrift EP-A-0 204 16 bekannt.

Eine Flexibilisierung der Urethan(meth)acrylate (a1) ist beispielsweise dadurch möglich, daß entsprechende isocyanat-funktionelle Präpolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Präpolymere durchgeführt werden.

Als Beispiele für geeignete Urethan(meth)acrylate (a1) seien auch die folgenden, im Handel erhältlichen polyfunktionellen aliphatischen Urethanacrylate genannt:
- Crodamer® UVU 300 der Firma Croda Resins Ltd., Kent, Großbritanniens;
- Genomer® 4302, 4235, 4297 oder 4316 der Firma Rahn Chemie, Schweiz;
- Ebecryl® 284, 294, IRR351, 5129 oder 1290 der Firma UCB, Drogenbos, Belgien;
- Roskydal® LS 2989 oder LS 2545 oder V94-504 der Firma Bayer AG, Deutschland;
- Viaktin® VTE 6160 der Firma Vianova, Österreich; oder
- Laromer® 8861 der Firma BASF AG sowie davon abgewandelte Versuchsprodukte.
   Hydroxylgruppenhaltige Urethan(meth)acrylate (a1) sind beispielsweise aus den Patentschriften US-A-4,634,602 oder 4,424,252 bekannt.
   Ein Beispiel für ein geeignetes Polyphosphazen(meth)acrylat (a1) ist das Phosphazendimethacrylat der Firma Idemitsu, Japan.
   Der erfindungsgemäß zu verwendende Beschichtungsstoff enthält des weiteren einen Bestandteil (a2).
   Auch bei diesem Bestandteil (a2) handelt es sich um ein Harz im Sinne der vorstehend bei der Beschreibung der Harze (a1) aufgeführten Definition. Somit entstammen auch die Harze (a2) aus den vorstehend beschriebenen Oligomer- und Polymerklassen. Von Vorteil sind hierbei die (meth)acrylfunktionellen (Metb)Acrylcopolymere, welche daher erfindungsgemäß bevorzugt als Harze (a2) verwendet werden.
   Vorzugsweise werden die Harze (a2) in einer Menge von 5 bis 90 Gew.-%, besonders bevorzugt 10 bis 80 Gew.-% und insbesondere 15 bis 70 Gew.-%, jeweils bezogen auf die Gesamtmenge des Beschichtungsstoffs I angewandt.
   Die Harze (a2) enthalten mindestens zwei, insbesondere mindestens drei funktionelle Gruppen (a21), welche der Vernetzung mit aktinischer Strahlung dienen. Beispiele geeigneter erfindungsgemäß zu verwendender funktioneller Gruppen (a21) sind die vorstehend beschriebenen funktionellen Gruppen (a11).
   Des weiteren enthalten die Harze (a2) mindestens eine, vorzugsweise mindestens zwei und insbesondere mindestens drei funktionelle Gruppen (a22), welche der thermischen Vernetzung dienen. Beispiele geeigneter funktioneller Gruppen dieser An lassen sich der vorstehenden Übersicht entnehmen. Isocyanatgruppen sind hierbei besonders vorteilhaft und werden deshalb erfindungsgemäß ganz besonders bevorzugt als funktionelle Gruppen (a22) verwendet. Besondere Vorteile resultieren, wenn die Harze (a2) einen Gehalt an Isocyanatgruppen (a22) von 7 bis 20 Gew.-%, besonders bevorzugt 8 bis 18 Gew.-% und insbesondere 9 bis 16 Gew.-%, jeweils bezogen auf das Harz (a2), aufweisen.
   Beispiele geeigneter Harze (a2) der vorstehend beschriebenen Art werden beispielsweise in den Patentschriften US-A-5,234,970, EP-A-0 549 116 oder EP-A-0 618 244 beschrieben.
   Der erfindungsgemäß zu verwendende Beschichtungsstoff kann mindestens einen Photoinitiator (a3) enthalten. Wenn der Beschichtungsstoff bzw. die Primerschicht mit UV-Strahlung vernetzt werden soll, ist die Verwendung eines Photoinitiators (a3) im allgemeinen notwendig. Sofern sie mitverwendet werden, sind sie in dem Beschichtungsstoff bevorzugt in Anteilen von 0,1 bis 10 Gew.%, 1 bis 8 Gew.-% und insbesondere 2 bis 6 Gew.-%, jeweils bezogen auf die Gesamtmenge des Beschichtungsstoffs, enthalten.
   Beispiele geeigneter Photoinitiatoren (a3) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure® MBF der Firma Rahn und Lucirin® TPO der Firma BASF AG erhältlichen Produkte eingesetzt werden.
   Neben den Photoinitiatoren (a3) können übliche Sensibilisatoren (a3) wie Anthracen in wirksamen Mengen verwendet werden.
   Des weiteren kann der Beschichtungsstoff mindestens einen Initiator der thermischen Vernetzung (a4) enthalten. Diese bilden ab 80 bis 120 °C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,1 bis 10 Gew.-%, vorzugsweise 0,5 bis 8 Gew.-% und insbesondere 1 bis 5 Gew.-%, jeweils bezogen auf die Gesamtmenge des Beschichtungsstoffs.
   Darüber hinaus kann der Beschichtungsstoff mindestens einen mit aktinischer Strahlung und/oder thermisch härtbaren Reaktivverdünner (a5) enthalten.
   Beispiele geeigneter thermisch vernetzbarer Reaktiverdünner (a5) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind.
   Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt).
   Beispiele geeigneter, oligomerer Polyole (a5) dieser Art weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;
   Weitere Beispiele geeigneter thermisch vernetzbarer Reaktiverdünner (a5) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit).
   Die Herstellung dieser Reaktivverdünner (a5) kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R Newkome, C. N. Moorefield und F. Vögtle, "Dendritic Molecules, Concepts, Syntheses, Perspectives", VCH, Weinheim, New York, 1996, beschrieben.
   Weitere Beispiele geeigneter Reaktivverdünner (a5) sind Polycarbonatdiole, Polyesterpolyole, Poly(meth)acrylatdiole oder hydroxylgruppenhaltige Polyadditionsprodukte.
   Beispiele geeigneter reaktiver Lösemittel, welche als Reaktiverdünner (a5) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmo-nobutylether, Trimethylolpropan, 2-Hydroxypropionsäureethylester oder 3-Methyl-3-methoxybutanol sowie Derivate auf Basis von Propylenglykol, z.B. Ethoxyethylpropionat, Isopropoxypropanol oder Methoxypropylacetat genannt.
   Als Reaktivverdünner (a5), welche mit aktinischer Strahlung vernetzt werden können, werden beispielsweise (Meth)Acrylsäure und deren Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Styrol, Vinyltoluol, Divinylbenzol, Pentaerythrittri(meth)acrylat, Pentaerythrittetra(meth)acrylat, Dipropylenglykoldi(meth)acrylat, Hexandioldi-(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobornyl(meth)acrylat, Dimethylacrylamid und Dicyclopentylacrylat, die in der EP-A-0 250 631 beschriebenen, langkettigen linearen Diacrylate mit einem Molekulargewicht von 400 bis 4000, bevorzugt von 600 bis 2500, genannt. Beispielsweise können die beiden Acrylatgruppen durch eine Polyoxibutylenstruktur getrennt sein. Einsetzbar sind außerdem 1,12-Dodecyl-diacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.
   Bevorzugt werden als Reaktivverdünner (a5) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.
   Sofern sie mit verwendet werden, werden die Reaktivverdünner (a5) in einer Menge von vorzugsweise 2 bis 70 Gew.-%, besonders bevorzugt 10 bis 65 Gew.-% und insbesondere 15 bis 50 Gew.-%, jeweils bezogen auf die Gesamtmenge des Beschichtungsstoffs, angewandt.
   Darüber hinaus kann der Beschichtungsstoff mindestens ein übliches und bekanntes Lackadditiv (a6) in wirksamen Mengen, d.h. in Mengen vorzugsweise bis zu 40 Gew.%, besonders bevorzugt bis zu 30 Gew.-% und insbesondere bis zu 20 Gew.%, jeweils bezogen auf die Gesamtmenge des Beschichtungsstoffs, enthalten.
   Beispiele geeigneter Lackadditive (a6) sind
- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere, Polyurethane oder Acrylatcopolymerisate, welche unter den Handelsnamen Modaflow® oder Disperlon® am Markt erhältlich sind;
- Haftvermittler wie Tricyclodecandimethanol;
- Verlaufmittel;
- filmbildende Hilfsmittel wie Cellulose-Derivate;
- Füllstoffe wie Talk, Calciumcarbonat und -sulfat, Bariumsulfat, Titandioxid oder Zinksulfid; ergänzend wird auf das Römpp Lexikon »Lacke und Druckfarben« Georg Thieme Verlag, Stuttgart, 1998, Seiten 250 bis 252, verwiesen;
- elektrisch leitfähige Pigmente wie vorbehandeltes Titandioxid oder Minatec® 40CM der Firma Merck, Darmstadt;
- Flammschutzmittel oder
- Mattierungsmittel.

Weitere Beispiele geeigneter Lackadditive (a6) werden in dem Lehrbuch "Lackadditive" von Johan Bieleman, Wiley-VCH, Weinheim, New York, 1998, beschrieben.

Nicht zuletzt enthält der Beschichtungsstoff mindestens einen thermisch härtbaren. Bestandteil (a7) ausgewählt aus thermisch härtbaren Bindemitteln und Vernetzungsmitteln in untergeordneten Mengen. Im Rahmen der vorliegenden Erfindung sind unter "untergeordneten Mengen" Mengen zu verstehen, welche die Dual Cure-Eigenschaften des Beschichtungsstoffs nicht nachteilig beeinflussen, sondern in vorteilhafterweise variieren. Sofern sie mit verwendet werden, soll ihr Anteile an dem Beschichtungsstoff im allgemeinen 40 Gew.-%, vorzugsweise 35 Gew.% und insbesondere 30 Gew.% nicht überschreiten.

Geeignete Bestandteile (a7) sind die von den thermisch härtbaren Beschichtungsstoffen her bekannten Bindemittel und Vernetzungsmittel.

Beispiele geeigneter Bindemittel (a7) sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, Polylactone, Polycarbonate, Polyether, Epoxidharz-Amin-Addukte. (Meth)Acrylatdiole, partiell verseifte Polyvinylester oder Polyharnstoffe, von denen die Acrylatcopolymerisate, die Polyester, die Polyurethane, die Polyether und die Epoxidharz-Amin-Addukte vorteilhaft sind.

Geeignete Bindemittel (a7) werden beispielsweise unter den Handelsnamen Desmophen® 650, 2089, 1100, 670, 1200 oder 2017 von der Firma Bayer, unter den Handelsnamen Priplas oder Pripol® von der Firma Uniqema, unter den Handelsnamen Chempol® Polyester oder Polyacrylat-Polyol von der CCP, unter den Handelsnamen Crodapol® 0-85 oder 0-86 von der Firma Croda oder unter dem Handelsnamen Formrez® ER417 von der Firma Witco vertrieben.

Beispiele geeigneter Vernetzungsmittel (a7) sind blockierte Di- und/oder Polyisocyanate.

Beispiele geeigneter Di- und/oder Polyisocyanate für die Herstellung der blockierten Derivate (a7) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 1000 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff-und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Beispiele für geeignete Blockierungsmittel sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel (a7) können auch Tris(alkoxycarbonylamino)triazine der allgemeinen Formel 5 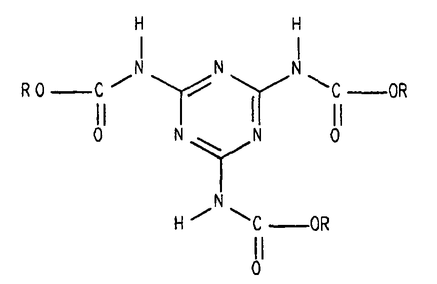 eingesetzt werden.

Beispiele geeigneter Tris(alkoxycarbonylamino)triazine (a7) werden in den Patentschriften US-A-4,939,213, US-A-5,084,541 oder der EP-A-0 624 577 Wenn der Beschichtungsstoff ein Harz (a1) enthält, welches keine funktionellen Gruppen (a12) aufweist, ist der Bestandteil (a7) in dem Beschichtungsstoff zwingend enthalten. Erfindungsgemäß ist es hierbei von Vorteil, wenn zu diesem Zweck die vorstehend beschriebenen Bindemittel (a7) verwendet werden.

Insgesamt ist es für den erfindungsgemäß zu verwendenden Beschichtungsstoff von Vorteil, wenn die komplementären funktionellen Gruppen (a12) und (a22), insbesondere die Hydroxylgruppen und die Isocyanatgruppen, in einem molaren Verhältnis von OH/NCO von 0,5 bis 2 : 1, besonders bevorzugt 0,8 bis 1,5 : 1, ganz besonders bevorzugt 0,8 bis 1,2 : 1 und insbesondere 0,8 bis 1,0 : 1 vorliegen.

Der erfindungsgemäß zu verwendende Beschichtungsstoff kann in unterschiedlichen Formen vorliegen.

So kann er bei entsprechender Wahl seiner vorstehend beschriebenen Bestandteile als flüssiger Beschichtungsstoff vorliegen, welcher im wesentlichen frei von organischen Lösemitteln und/oder Wasser ist. Indes kann es sich bei dem Beschichtungsstoff um eine Lösung oder Dispersion der vorstehend beschriebenen Bestandteile in Wasser und/oder organischen Lösemitteln handeln. Es ist ein weiterer Vorteil des erfindungsgemäß zu verwendenden Beschichtungsstoffs, daß Feststoffgehalte von bis zu 80 Gew.-%, bezogen auf den Beschichtungsstoff, eingestellt werden können.

Des weiteren kann der Beschichtungsstoff bei entsprechender Wahl seiner vorstehend beschriebenen Bestandteile ein Pulverklarlack sein. Dieser Pulverklarlack kann gegebenenfalls in Wasser dispergiert werden, wodurch ein Pulverslurry-Klarlack resultiert.

Dabei kann der Beschichtungsstoff, wenn es die Reaktivität seiner Bestandteile (a1) und/oder (a7) einerseits und (a2) andererseits zuläßt, ein Einkomponentensystem sein. Besteht indes die Gefahr, daß die genannten Bestandteile vorzeitig thermisch vernetzen, empfiehlt es sich den Beschichtungsstoff als Zwei- oder Mehrkomponentensystem auszulegen, bei dem zumindest der Bestandteil (a2) getrennt von den übrigen Bestandteilen gelagert und erst kurz vor der Verwendung zu diesen hinzugegeben wird.

Gemäß dem erfindungsgemäßen Versiegelungsverfahren wird zum Zwecke der Herstellung der erfindungsgemäßen Compounds der erfindungsgemäß zu verwendende Beschichtungsstoff auf die Oberfläche der SMC (Sheet Moulded Compounds) oder der BMC (Block Molded Compounds) als Primerschicht appliziert.

Hierbei kann im Rahmen des erfindungsgemäßen Versiegelungsverfahrens eine oder mehrere Primerschicht(en) appliziert werden. Werden mehrere Primerschichten appliziert, können erfindungsgemäße Beschichtungsstoffe unterschiedlicher stofflicher Zusammensetzung verwendet werden. In den allermeisten Fällen wird indes das angestrebte Eigenschaftsprofil der erfindungsgemäßen Compounds mit einer Primerschicht erzielt.

Die Primerschicht wird in einer Naßschichtdicke aufgetragen, daß nach der Aushärtung in dem fertigen erfindungsgemäßen Compound eine Trockenschichtdicke der Versiegelung von 10 bis 100, vorzugsweise 15 bis 75, besonders bevorzugt 20 bis 55 und insbesondere 20 bis 35µm resultiert.

Die Applikation des erfindungsgemäß zu verwendenden Beschichtungsstoffs zum Zwecke der Herstellung der Primerschicht kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritztapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem erfindungsgemäß zu verwendenden Beschichtungsstoff selbst, betrieben wird.

Bevorzugt wird die Applikation bei Beleuchtung mit sichtbarem Licht einer Wellenlänge von über 550 µm oder unter Lichtausschluß durchgeführt. Hierdurch werden eine stoffliche Änderung oder Schädigung des Beschichtungsstoffs I und des Overspray vermieden.

Selbstverständlich können die vorstehend beschriebenen Applikationsmethoden auch bei der Herstellung einer Klarlackierung und Mehrschichtlackierungen im Rahmen eines Lackierverfahrens angewandt werden.

Die Primerschicht wird nach ihrer Applikation thermisch und mit aktinischer Strahlung ausgehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Primerschicht oder zum Verdunsten von flüchtigen Bestandteilen wie Lösemittel, Wasser oder Kohlendioxid, wenn der Beschichtungsstoff mit überkritischem Kohlendioxid als Lösemittel appliziert worden ist. Die Ruhezeit kann durch die Anwendung erhöhter Temperaturen bis 80 °Celsius unterstützt und/oder verkürzt werden, sofern hierbei keine Schädigungen oder Veränderungen der Primerschicht eintreten, etwa eine vorzeitige vollständige Vernetzung.

Die Aushärtung erfolgt mit aktinischer Strahlung mit UV-Strahlung oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Primerschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beisppielsweise in R. Holmes, U.V. and E.B. Curing Formulations for Printing Inks, Coatings and Paints, SITA Technology, Academic Press, London, United Kindom 1984, beschrieben. beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (a7) verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Überdies können die Aminoplastharze auch als Bindemittel (a11) in der Basisfarbe (A1) verwendet werden.

Weitere Beispiele geeigneter Vernetzungsmittel (a7) sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel (a7) sind Siloxane, insbesondere Siloxane mit mindestens einer Trialkoxy- oder Dialkoxysilangruppe.

Weitere Beispiele geeigneter Vernetzungsmittel (a7) sind Polyanhydride, insbsondere Polysuccinsäureanhydrid.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur von 50 bis 100 °C, besonders bevorzugt 80 bis 100 °C und insbesondere 90 bis 100 °C während einer Zeit von 1 min bis zu 2 h, besonders bevorzugt 2 min bis zu 1 h und insbesondere 3 bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 140 °C nicht zu überschreiten.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Selbstverständlich können die vorstehend beschriebenen Härtungsmethoden auch bei der Herstellung einer Klarlackierung und Mehrschichtlackierungen im Rahmen eines Lackierverfahrens angewandt werden.

Die in erfindungsgemäßer Verfahrensweise erhaltenen erfindungsgemäßen Compounds zeigen keinerlei Anzeichen von Mikrobläschen (microbubbling oder blistering). Ihre Oberfläche ist glatt und frei von Störungen. Ihre Überlackierbarkeit ist hervorragend, ebenso ihre thermische Stabilität: selbst bei mehrstündiger thermischer Belastung bei hohen Temperaturen wird die Oberfläche nicht geschädigt. Die erfindungsgemäßen Compounds können daher direkt in unbeschichtete Automobilk-arosserien eingebaut werden und zusammen mit diesen in der Linie lackiert werden.

Zur Herstellung der Klarlackierung wird der erfindungsgemäß zu verwendende Beschichtungsstoff nach einem Lackierverfahren mit Hilfe der vorstehend beschriebenen Applikationsmethoden auf die vorstehend beschriebenen grundierten oder ungrundierten Substrate appliziert und thermisch und mit aktinischer Strahlung ausgehärtet.

Die Klarlackierungen können auch Bestandteil von Mehrschichichtackierungen sein.

Zu diesem Zweck wird der erfindungsgemäß zu verwendende Beschichtungsstoff nach dem Lackierverfahren nicht aufdie grundierten oder ungrundierten Substrate, sondern auf mindestens eine hierauf befindliche farb- und/oder effektgebende Basislackschicht aus einem thermisch sowie gegebenenfalls mit aktinischer Strahlung härtbaren pigmentierten Beschichtungsstoff appliziert.

Es ist von Vorteil, die erfindungsgemäß zu verwendenden Beschichtungsstoffe nach dem Naß-in-naß-V erfahren auf die getrocknete oder abgelüftete, indes nicht ausgehärtete Basislackschicht aufzutragen, wonach die resultierende Klarlackschicht und die Basislackschicht gemeinsam thermisch und mit aktinischer Strahlung gehärtet werden.

Als Beschichtungsstoff für die Herstellung der Basislackschicht kommen die üblichen und bekannten Basislacke, insbesondere Wasserbasislacke, in Betracht.

Beispiele geeigneter Wasserbasislacke sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Die Klarlackierungen und Mehrschichtlackierungen weisen eine gute Kratzfestigkeit, Zwischenschichthaftung, Witterungsstabilität und Chemikalienstabilität sowie ein hervorragendes optisches Eigenschaftsprofil auf.

### Beispiel 1

### Die Herstellung erfindungsgemäßer Compounds

Auf SMC (Sheet Moulded Compounds), wie sie für die Herstellung der Reflektoren von Automobillampen verwendet werden, wurde jeweils eine Primerschicht aus einem Beschichtungsstoff appliziert, während 6 min bei 50 bis 60 °C vorgetrocknet und mit LTV-Strahlung (1 bis 3 Joules/cm²) und thermisch (10 min bei 90 °C) vollständig ausgehärtet. Die Primerschicht wurde in allen Fällen in einer solchen Naßschichtdicke aufgetragen, daß in den versiegelten Compounds eine Trockenschichtdicke der Versiegelung von 25 bis 27 µm resultierte.

Der Beschichtungsstoff bestand aus 100 Gewichtsteilen eines Urethan(meth)acrylats, welches frei von Hydroxylgruppen war (Ebecryl® 5129 der Firma UCB), 100 Gewichtsteilen eines Polyesterpolyols (Desmophen® der Firma Bayer AG), 2,5 Gewichtsteilen eines handelsüblichen Photoinitiators (Irgacure® 819 der Firma Ciba und Lucirin® TPO der Firma BASF AG), 0,6 Gewichtsteilen eines handelsüblichen UV-Absorbers und Lichtschutzmittels (Mischung aus Tinuvin® 400 und Neutral-HALS der Firma Ciba sowie einem sterisch gehinderten Phenol), 50 Gewichtsteilen eines handelsüblichen oligomeren Acrylats mit freien Isocyanatgruppen und Acrylatgruppen (Roskydal® 2545 der Firma Bayer AG) und 76 Gewichtsteilen Mikrotalk als Füllstoff. Der Beschichtungsstoff wurde für die Applikation mit einem geeigneten organischen Lösemittel (Gemisch aus Butylacetat, n-Butanol und Ektapro®) auf Spritzviskosität (Festkörpergehalt etwa 30 bis 40 Gew.-%) eingestellt.

Die in erfindungsgemäßer Verfahrensweise erhaltenen erfindungsgemäßen Compounds zeigten keinerlei Anzeichen von Mikrobläschen (microbubbling oder blistering). Ihre Oberfläche war glatt und frei von Störungen. Ihre Überlackierbarkeit war hervorragend, ebenso ihre thermische Stabilität: selbst bei zweistündiger thermischer Belastung bei 190 °C wurde die Oberfläche nicht geschädigt. Die erfindungsgemäßen Compounds lieferten hervorragende Reflektoren von langer Gebrauchsdauer.

## Patentansprüche

1. Verwendung eines thermisch und mit aktinischer Strahlung härtbaren Beschichtungsstoffs, enthaltend
(a1) 5 bis 90 Gew.-%, bezogen auf den Beschichtungsstoff, mindestens eines Bestandteiles mit
(a11) mit mindestens zwei (Meth)Acrylatgruppen, welche der Vernetzung mit aktinischer Strahlung dienen, oder
(a11) mit mindestens zwei (Meth)Acrylatgruppen und
(a12) mit mindestens einer funktionellen Gruppe, welche mit der komplementären funktionellen Gruppe (a22) des Bestandteiles (a2) thermische Vernetzungsreaktionen eingehen kann;
(a2) mindestens einen von (a1) verschiedenen Bestandteil mit
(a21) mindestens zwei funktionellen Gruppen, welche der Vernetzung mit aktinischer Strahlung dienen, und
(a22) mindestens einer funktionellen Gruppe, welche der thermischen Vernetzung dient, und
(a7) mindestens einen thermisch härtbaren Bestandteil, ausgewählt aus thermisch härtbaren Bindemitteln und Vernetzungsmitteln; sowie gegebenenfalls
(a3) mindestens einen Photoinitiator;
(a4) mindestens einen Initiator der thermischen Vernetzung;
(a5) mindestens einen mit aktinischer Strahlung und/oder thermisch härtbaren Reaktivverdünner und
(a6) mindestens ein Lackadditiv;
für die Versiegelung von SMC (Sheet Molded Compounds) und BMC (Bulk Molded Compounds).

2. Verwendung nach Anspruch 1, **dadurch gekennzeichnet** das, dass es sich bei dem Bestandteil (a1) um ein Urethan(meth)acrylat und bei dem Bestandteil (a2) um ein (meth)crylatfunktionelles (Meth)Acrylatcopolymerisaten mit freien Isocyanatgruppen und/oder um ein (meth)acrylatfunktionelles Polyisocyanat handelt.

3. Verfahren zur Versiegelung von SMC (Sheet Molded Compounds) und BMC (Bulk Molded Compounds) durch Applikation einer Primerschicht und Aushärten der Primerschicht, **dadurch gekennzeichnet, dass** man hierfür einen Beschichtungsstoff wie in Anspruch 1 oder 2 definiert, verwendet.

4. SMC (Sheet Molded Compounds) und BMC (Bulk Molded Compounds), versiegelt mit einer Primerschicht, herstellbar mit Hilfe des Verfahrens gemäß Anspruch 3.

5. Verwendung von SMC (Sheet Molded Compounds) und BMC (Bulk Molded Compounds) gemäß Anspruch 4 für die Herstellung von Automobilteilen.

6. Automobile, enthaltend SMC (Sheet Molded Compounds) und BMC (Bulk Molded Compounds) gemäß Anspruch 4.

## Claims

1. Use of a coating material curable thermally and with actinic radiation, comprising
(a1) from 5 to 90% by weight, based on the coating material, of at least one constituent containing
(a11) at least two (meth)acrylate groups which serve for crosslinking with actinic radiation, or
(a11) at least two (meth)acrylate groups and
(a12) at least one functional group which can enter into thermal crosslinking reactions with the complementary functional group (a22) of the constituent (a2);
(a2) at least one constituent , different from (a1), containing
(a21) at least two functional groups which serve for crosslinking with actinic radiation, and
(a22) at least one functional group which serves for thermal crosslinking, and
(a7) at least one thermally curable constituent, selected from thermally curable binders and crosslinkers;
and also, if desired, comprising
(a3) at least one photoinitiator;
(a4) at least one thermal crosslinking initiator;
(a5) at least one reactive diluent curable thermally and/or with actinic radiation, and
(a6) at least one coatings additive;
for sealing SMCs (sheet moulded compounds) and BMCs (bulk moulded compounds).

2. Use according to Claim 1, **characterized in that** the constituent (a1) comprises a urethane (meth)acrylate and the constituent (a2) comprises a (meth)acrylate-functional (meth)acrylate copolymer containing free isocyanate groups and/or a (meth)acrylate-functional polyisocyanate.

3. Process for sealing SMCs (sheet moulded compounds) and BMCs (bulk moulded compounds) by applying a primer coat and curing the primer coat, **characterized in that** a coating material as defined in Claim 1 or 2 is used for this.

4. SMCs (sheet moulded compounds) and BMCs (bulk moulded compounds) sealed with a primer coat producible with the aid of the process according to Claim 3.

5. Use of the SMCs (sheet moulded compounds) and BMCs (bulk moulded compounds) according to Claim 4 to produce automobile parts.

6. Automobiles, comprising SMCs (sheet moulded compounds) and BMCs (bulk moulded compounds) according to Claim 4.

## Revendications

1. Utilisation d'un matériau de revêtement thermodurcissable et durcissable sous l'effet d'un rayonnement actinique, contenant
(a1) 5 à 90% en poids, par rapport au matériau de revêtement, d'au moins un constituant comprenant
(a11) au moins deux groupements (méth)acrylates qui servent à la réticulation sous l'effet d'un rayonnement actinique, ou
(a11) au moins deuz groupements (méth)acrylates, et
(a12) au moins un groupement fonctionnel qui peut entrer dans les réactions de réticulation thermiques avec le groupement fonctionnel complémentaire (a22) du constituant (a2) ;
(a2) au moins un constituant différent de (a1) comprenant
(a21) au moins deux groupements fonctionnels qui servent à la réticulation sous l'effet d'un rayonnement actinique et
(a22) au moins un groupement fonctionnel servant à la réticulation thermique et
(a7) au moins un constituant thermodurcissable sélectionné parmi des liants et des réticulants thermodurcissables ; ainsi que, le cas échéant,
(a3) au moins un photo-initiateur ;
(a4) au moins un initiateur de la réticulation thermique ;
(a5) au moins un diluant réactif durcissable sous l'effet d'un rayonnement actinique et/ou thermodurcissable et
(a6) au moins un additif de laque ; pour le colmatage de composites SMC (Sheet Moulded Compounds) et de composites BMC (Bulk Moulded Compounds).

2. Utilisation selon la revendication 1, **caractérisé en ce qu'**il s'agit, pour le constituant (a1), d'un (méth)acrylate d'uréthane et, pour le constituant (a2), d'un copolymère de (méth)acrylate à fonctionnalité (méth)acrylate avec des groupements isocyanate libres et/ou d'un polyisocyanate à fonctionnalité (méth)acrylate.

3. Procédé pour le colmatage de composites SMC (Sheet Moulded Compounds) et de composites BMC (Bulk Moulded Compounds) par application d'une couche d'apprêt et durcissement de la couche d'apprêt, **caractérisé en ce qu'**on utilise pour ceci un matériau de revêtement comme défini dans la revendication 1 ou 2.

4. Composites SMC (Sheet Moulded Compounds) et composites BMC (Bulk Moulded Compounds) colmatés avec une couche d'apprêt pouvant être réalisée à l'aide du procédé selon la revendication 3.

5. Utilisation des composites SMC (Sheet Moulded Compounds) et des composites BMC (Bulk Moulded Compounds) selon la revendication 4 pour la fabrication de pièces pour automobiles.

6. Automobiles, contenant des composites SMC (Sheet Moulded Compounds) et des composites BMC (Bulk Moulded Compounds) selon la revendication 4.
